# EUROPEAN PATENT SPECIFICATION

(11) **EP 4 532 102 B1**
(45) Date of publication and mention of the grant of the patent: **20.05.2026**
(21) Application number: 23730082.7
(22) Date of filing: 31.05.2023
(51) Int. Cl.: B01J 23/63, F23C 13/08, B01J 37/06

(54) **METAL-SUPPORTED CATALYTIC SYSTEMS FOR METHANE COMBUSTION UNDER WET CONDITIONS, PROCESS FOR THEIR PREPARATION AND USES THEREOF**
KATALYTISCHE SYSTEME AUF METALLTRÄGERN FÜR DIE METHANVERBRENNUNG UNTER NASSEN BEDINGUNGEN, VERFAHREN ZU IHRER HERSTELLUNG UND VERWENDUNGEN DERSELBEN
SYSTÈMES CATALYTIQUES SUR SUPPORT MÉTALLIQUE DE COMBUSTION DU MÉTHANE DANS DES CONDITIONS HUMIDES, LEUR PROCÉDÉ DE PRÉPARATION ET LEURS UTILISATIONS

(30) Priority: 01.06.2022 EP 22382529
(43) Date of publication of application: 09.04.2025
(73) Proprietor: Umicore AG & Co. KG, 63457 Hanau-Wolfgang (DE)
(72) Inventor: RODRÍGUEZ-FERNÁNDEZ, Aída, Valencia (ES); GARCÍA-HURTADO, Elisa, Valencia (ES); ZHANG, Bei, Valencia (ES); NOACK, Hendrik-David, Hanau-Wolfgang (DE); HOUGAARD PEDERSEN, Kim, Hørsholm (DK); THØGERSEN, Joakim, Hørsholm (DK); MOLINER-MARÍN, Manuel, Valencia (ES); CORMA-CANÓS, Avelino, Valencia (ES)
(86) International application number: PCT/EP2023/064590
(87) International publication number: WO 2023/232893

(56) References cited:
- CN-A- 113 274 999
- LEI YANYAN ET AL: "Typical crystal face effects of different morphology ceria on the activity of Pd/CeO2 catalysts for lean methane combustion", FUEL, vol. 233, 1 December 2018 (2018-12-01), GB, pages 10 - 20, XP055978017, ISSN: 0016-2361, DOI: 10.1016/j.fuel.2018.06.035

## Description

### TECHNICAL FIELD OF THE INVENTION

The present invention relates to a metal-supported catalytic system for methane combustion under wet conditions comprising a support material in the form of nanocubes substantially free of alkali metal cations (Alk), wherein the support material comprises at least one oxide selected from the group consisting of ceria, a ceria-based mixed oxide and any combination thereof, and at least one supported transition metal (M). Also provided is a process for preparing the metal-supported catalytic system, as well as the use of the metal-supported catalytic system in the catalytic combustion of methane under wet conditions.

### BACKGROUND OF THE INVENTION

The design of efficient methane combustion catalytic systems in natural gas-fired engines, gas turbines or solid oxide fuel cells, among others, is a major concern to reduce the undesired greenhouse effects associated with methane emissions. Those emissions typically originate from the incomplete combustion of the natural gas.

Over the last decades, different catalytic systems for methane combustion have been investigated, and supported transition metals, in particular metals from any of the groups 5-11 of the period table of the elements and, more particularly, palladium, alone or in combination with other metals, are of particular interest. For a successful catalytic application in methane combustion, these catalytic systems necessarily require high catalytic activities at low-intermediate reaction temperatures (*i.e.* temperatures around and below 550°C) and high resistance to deactivation under operation conditions in the presence of water in the stream and may also involve pressurized working conditions.

On the other hand, it is known in the art that ceria and cerium-based mixed oxides typically provide suitable supports onto which noble metals can be deposited to form metal-supported catalytic systems. In particular, different well-structured ceria particles have recently been evaluated in the literature as catalyst supports for methane combustion under dry conditions by Guo et al. (RSC Adv. 2018, 8, 38641-38647), Dong et al. (Chin. J. Catal. 2021, 42, 2234-2241), Zhou et al. (Chinese patent application CN113274999), and Chen et al. (ACS Catal. 2021, 11, 5666-5677). Likewise, Yanyan Lei et al. (Fuel 233, 2018, 10-20) study the catalytic properties of palladium (Pd) nanocrystals loaded on different morphology CeO₂ carrier for lean methane (CH₄) combustion. All these prior art references disclose the preparation of rod- and cube-type ceria supports useful for producing metal-supported catalysts, wherein all these CeO₂ synthetic processes have been carried out using alkali bases, in particular, NaOH and KOH.

However, all the above prior art studies were carried out under dry conditions and, consequently, the impact of the competitive adsorption of water and methane on the catalytic results at low and intermediate temperatures has not been unraveled so far. Regarding other different catalytic systems, though, it is known in the art that the presence of water dramatically inhibits or changes the catalyst performance for methane combustion, as described, for example, by Hoque et al. (Korean J. Chem. Eng. 2014, 31, 1316). Therefore, it is not possible to extrapolate results achieved under dry conditions to those obtained under wet conditions.

Thus, there exists the need for a technical solution which provides new metal-supported catalytic systems particularly useful for methane combustion under wet conditions, which may advantageously provide high catalytic activities while, at the same time, they also provide significant resistance to deactivation under working conditions.

### SUMMARY OF THE INVENTION

In a first aspect of the invention, a metal-supported catalytic system for methane combustion under wet conditions is provided, wherein the methane combustion is carried out using a reaction feed having a volume percentage of water which is in the range from 0.5% to 30%, based on the total volume of the reaction feed, wherein the metal-supported catalytic system comprises:
- a support material comprising at least one oxide selected from the group consisting of ceria, a ceria-based mixed oxide, and any combination thereof; and
- at least one supported transition metal (M) selected from any of the groups 5 to 11 of the periodic table of the elements;
wherein the support material is in the form of nanocubes and is substantially free of alkali metal cations (Alk), and wherein the amount of the at least one supported transition metal (M) is less than 10 % by weight based on the total weight of the catalytic system.

According to a second aspect of the invention, a process for preparing a metal-supported catalytic system is provided, wherein the process comprises the following steps:
(i) preparing a mixture comprising water, at least one cerium source, at least one alkali metal cation (Alk) source, and optionally at least one source of a metal element (X) capable of forming a ceria-based mixed oxide;
   wherein the resulting mixture has a composition with a molar ratio:

      *a Ce* : *b* X : *c* Alk : *d* H₂O
   wherein
   *a* is 1;
   *b is* in the range from 0 to 0.4;
   *c* is higher than 0.01; and
   *d* is higher than 1.
(ii) subjecting the mixture to hydrothermal treatment at a temperature in the range from 50°C to 250°C during a determined period which is sufficient to form a crystalline material;
(iii) removing the remaining alkali metal cations (Alk) from the material resulting from step (ii) until the quantity of residual alkali metal cations in the material is lower than 0.3 wt.%, by subjecting it to ion exchange; and
(iv) incorporating at least one supported Group 5-11 transition metal (M), with a molar ratio Ce : M in the range from 1 : 0.001 to 1 : 0.5, respectively, to provide a metal-supported catalyst system.

In a third aspect of the invention, it is provided a metal-supported catalytic system for methane combustion under wet conditions, which is obtained or obtainable according to the process of the second aspect of the invention, as further defined according to any of the embodiments provided above.

According to a fourth aspect of the invention, it is provided the use of the metal-supported catalytic system according to the first aspect of the invention in the catalytic combustion of methane wherein water is present in the reaction feed, more preferably, in the catalytic combustion of methane under wet conditions.

In a fifth aspect of the invention, it is provided the use of the metal-supported catalytic system which is obtained or obtainable according to the process of the second aspect of the invention, in the catalytic combustion of methane wherein water is present in the reaction feed, more preferably, in the catalytic combustion of methane under wet conditions.

### BRIEF DESCRIPTION OF THE DRAWINGS

- **FIG. 1 -**: HRTEM image corresponding to a sample prepared according to steps (i) and (ii) of the process of the invention (see Example 1).
- **FIG. 2 -**: HRTEM image corresponding to the CeO₂-based support material in the form of nanorods (rod-type morphology) prepared as described in Comparative Example 3.

### DETAILED DESCRIPTION OF THE INVENTION

According to a first aspect of the invention, it is provided a metal-supported catalytic system for methane combustion under wet conditions, wherein the methane combustion is carried out using a reaction feed having a volume percentage of water which is in the range from 0.5% to 30%, based on the total volume of the reaction feed, wherein the metal-supported catalytic system comprises:
- a support material comprising at least one oxide selected from the group consisting of ceria, a ceria-based mixed oxide, and any combination thereof; and
- at least one supported transition metal (M) selected from any of the groups 5 to 11 of the periodic table of the elements;
wherein the support material is in the form of nanocubes and is substantially free of alkali metal cations (Alk), and wherein the amount of the at least one supported transition metal (M) is less than 10 % by weight based on the total weight of the catalytic system.

The expression "methane combustion under wet conditions", as used throughout the present application, shall be understood as meaning that methane combustion is carried out using a reaction feed having a volume percentage of water which is in the range from 0.5% to 30%, based on the total volume of the reaction feed. In a preferred embodiment, the wet conditions employed during methane combustion may be understood as meaning that methane combustion is carried out using a reaction feed having a volume percentage of water which is in the range from 5% to 15%, based on the total volume of the reaction feed.

The expression "reaction feed" in the context of the present invention refers to a gas stream which is fed to a combustion reactor. In the context of the methane combustion reaction under wet conditions, the gas stream may preferably consist of methane, 0.5-30 vol.% water, and a remaining amount adding up to 100 vol.% which comprises at least one inert gas, such as nitrogen, and which may optionally comprise other gas components such as NO, NO₂, CO, CO₂ and/or O₂. More preferably, in the context of the methane combustion reaction under wet conditions, the gas stream may consist of methane (*e.g.,* 0.01-0.2 vol.% methane, which corresponds to 100-2000 ppm methane), 5-15 vol.% water, and a remaining amount adding up to 100 vol.% which comprises at least one inert gas, such as nitrogen, and which may optionally comprise other gas components such as NO, NO₂, CO, CO₂ and/or O₂.

The support material according to the invention is provided in the form of nanocubes. The term "nanocube" refers to nanoparticles having cube-type morphology (also known as cuboidal morphology), wherein said morphology is defined as the shape of either (i) a regular nanocube being enclosed by six {100} surface planes, or a (ii) nanocube not having a perfectly cuboidal form such as, but not limited to, a nanocube having a certain degree of irregular {111}/{110} subfaceting in the {110} surface planes and/or a certain degree of corrugation (*i.e.* faceting) at the edges, and/or (c) a certain degree of truncation at the edge and/or corners of the nanocube, thus exposing its {110} and/or {111} surfaces, respectively.

It has been surprisingly found that the presence of alkali metal cations in the ceria and/or ceria-based mixed oxide(s) particles of the support material, especially those with cube-type morphologies, significantly inhibited the catalytic performance during methane combustion. The new metal-supported catalytic systems according to the invention, wherein the support material is in the form of nanocubes and substantially free of alkali metal cations (Alk), have been found to perform as highly efficient catalysts to undergo methane combustion reactions under wet conditions. Such catalytic performance has been found to be significantly higher than that observed with comparative alkali-containing analogous Pd-ceria catalytic systems or comparative alkali-free Pd-ceria catalytic systems based on nanorods (*i.e.* nanoparticles having rod-type morphologies), as illustrated by the experimental results herein provided.

Without wishing to be bound by theory, it is postulated that the unexpected and surprising high catalytic activity of the metal-supported catalytic systems according to the invention is highly influenced by the particular crystal morphology of the support material. It is considered that the crystal morphology has a tremendous influence on the degree of metal-support interactions and, consequently, on the catalytic applications for which the system is intended, more particularly, on the methane activation properties, especially when water is also present in the reaction medium. Different ceria-based morphologies expose different crystal faces, substantially modifying the interaction between the support material comprising at least one oxide selected from the group consisting of ceria, a ceria-based mixed oxide, and any combination thereof, and the at least one supported transition metal (M). In particular, it was experimentally found that the support material of the present invention, which is in the form of nanocubes, maximized the {1 0 0} crystal faces, whereas other morphologies, such as rod-type ceria morphologies, maximized {1 1 0} crystal faces and exhibited a significantly different catalytic behaviour.

The support material according to the invention, and in particular the nanocubes, may have an average primary particle size in the range from about 2 nm to about 800 nm, preferably from about 2 nm to about 600 nm, more preferably from about 2 nm to about 500 nm, still more preferably from about 5 nm to about 400 nm, still much more preferably from about 5 nm to about 200 nm, and still even much more preferably from about 5 nm to about 50 nm.

The term "about" when used in the context of the present invention preceding a number and referring to it, is to be understood as disclosing the particular value and designating any value lying within the range defined by the number ±5%, more preferably a range defined by the number ±2%. For example, the expression "about 1" shall be construed as "within the range of 0.95 to 1.05", preferably as "within the range of 0.98 to 1.02".

In an embodiment, the support material according to the invention, and in particular the nanocubes, may have an average primary particle size in the range from 2 nm to 800 nm, preferably from 2 nm to 600 nm, more preferably from 2 nm to 500 nm, still more preferably from 5 nm to 400 nm, still much more preferably from 5 nm to 200 nm, and still even much more preferably from 5 nm to 50 nm.

As used herein in this context, the expression "substantially free" is understood to mean that the support material contains less than 0.3 wt.%, preferably less than 0.2 wt.%, and more preferably less than 0.1 wt.% of alkali metal cations (Alk), based on the total weight of the catalytic system.

In one embodiment, the support material of the metal-supported catalytic system of the invention comprises at least one ceria-based mixed oxide, wherein the at least one ceria-based mixed oxide comprises less than 40 mol % (i.e. higher than 0 mol % but less than 40 mol %) of at least one metal element (X) capable of forming a ceria-based mixed oxide. The support material may comprise at least one ceria-based mixed oxide, wherein the at least one ceria-based mixed oxide comprises an amount of at least one metal element (X) capable of forming a ceria-based mixed oxide which is preferably in the range from 1 mol % to less than 40 mol %, more preferably in the range from 5 mol % to 30 mol %. The molar percentage of the at least one metal element (X) is calculated relative to the total number of mols of the at least one ceria-based mixed oxide, which means that, if more than one ceria-based mixed oxide is present in the metal-supported catalytic system of the invention, the molar percentage of the at least one metal element (X) shall be calculated relative to the total number of mols of the plurality of ceria-based mixed oxides.

The at least one element (X) capable of forming a ceria-based mixed oxide may preferably be selected from the group consisting of Zr, In, Sn, La, Pr, Nd, Gd, Y and any combination thereof. In a preferred embodiment, the at least one element (X) capable of forming a ceria-based mixed oxide is selected from the group consisting of Zr, La, Y and any combination thereof. In another preferred embodiment, the at least one element (X) capable of forming a ceria-based mixed oxide is selected from the group consisting of Zr, La and any combination thereof. More preferably, the at least one element (X) capable of forming a ceria-based mixed oxide is Zr.

Preferably, the support material of the metal-supported catalytic system of the invention comprises at least one ceria-based mixed oxide, wherein the at least one ceria-based mixed oxide comprises less than 40 mol % (*i.e.* higher than 0 mol % but less than 40 mol %) of at least one metal element (X) capable of forming a ceria-based mixed oxide, and the at least one metal element (X) is selected from the group consisting of Zr, In, Sn, La, Pr, Nd, Gd, Y and any combination thereof. In another preferred embodiment, the support material of the metal-supported catalytic system of the invention comprises at least one ceria-based mixed oxide, wherein the at least one ceria-based mixed oxide comprises an amount of at least one metal element (X) capable of forming a ceria-based mixed oxide which is preferably in the range from 1 mol % to less than 40 mol %, more preferably in the range from 5 mol % to 30 mol %, and wherein the at least one metal element (X) is selected from the group consisting of Zr, La, Y and any combination thereof. In other preferred embodiment, the support material of the metal-supported catalytic system of the invention comprises at least one ceria-based mixed oxide, wherein the at least one ceria-based mixed oxide comprises an amount of at least one metal element (X) capable of forming a ceria-based mixed oxide which is preferably in the range from 1 mol % to less than 40 mol %, more preferably in the range from 5 mol % to 30 mol %, and wherein the at least one metal element (X) is selected from the group consisting of Zr, La and any combination thereof.

In an embodiment, the support material of the metal-supported catalytic system of the invention may comprise, in an embodiment, at least one ceria-based mixed oxide, wherein the at least one ceria-based mixed oxide comprises less than 40 mol % (*i.e.* higher than 0 mol % but less than 40 mol %) of at least one metal element (X) capable of forming a ceria-based mixed oxide, and wherein the at least one metal element (X) is or consists of Zr. Preferably, the support material of the metal-supported catalytic system of the invention may comprise, in an embodiment, at least one ceria-based mixed oxide, wherein the at least one ceria-based mixed oxide comprises an amount of at least one metal element (X) capable of forming a ceria-based mixed oxide which is preferably in the range from 1 mol % to less than 40 mol %, more preferably in the range from 5 mol % to 30 mol %, and wherein the at least one metal element (X) is or consists of Zr.

In one embodiment, the support material of the metal-supported catalytic system of the invention comprises a plurality of ceria-based mixed oxides, wherein each ceria-based mixed oxide may be independently defined as indicated in any of the previously described embodiments.

The at least one supported transition metal (M) may be particularly selected from the group consisting of Pd, Pt, Rh, Cu, Ru, Co, Ag, Nb and any mixture thereof; preferably, the at least one supported transition metal (M) may be selected from the group consisting of Pd, Pt, Rh, Cu, and any mixture thereof; more preferably, the at least one supported transition metal (M) may be selected from the group consisting of Pd, Pt and any mixture thereof; even more preferably, the at least one supported transition metal (M) is or consists of Pd.

The metal-supported catalytic system according to the present invention may be further applied in or onto an inert substrate (*e.g.* a monolithic substrate or structure), or it can be further shaped into pellets, depending on the requirements of the application for which it is intended. Examples of suitable inert substrates include, but are not limited to, silica, alumina, silica-alumina, silica-magnesia, silica-zirconia, silica-thoria, silica-beryllia, silica-titania.

In a particular embodiment, the metal-supported catalytic system according to the present invention further comprises an inert substrate, said inert substrate comprising of consisting of silica, alumina, silica-alumina, silica-magnesia, silica-zirconia, silica-thoria, silica-beryllia, silica-titania, or any combination thereof.

According to a second aspect of the invention, it is provided a process for preparing a metal-supported catalytic system, wherein the process comprises the following steps:
(i) preparing a mixture comprising water, at least one cerium source, at least one alkali metal cation (Alk) source, and optionally at least one source of a metal element (X) capable of forming a ceria-based mixed oxide;
   wherein the resulting mixture has a composition with a molar ratio:

      *a* Ce : *b* X : *c* Alk : *d* H₂O
   wherein
   *a* is 1;
   *b is* in the range from 0 to 0.4;
   *c* is higher than 0.01; and
   *d* is higher than 1.
(ii) subjecting the mixture to hydrothermal treatment at a temperature in the range from 50°C to 250°C during a determined period which is sufficient to form a crystalline material;
(iii) removing the remaining alkali metal cations (Alk) from the material resulting from step (ii) until the quantity of residual alkali metal cations in the material is lower than 0.3 wt.%, by subjecting it to ion exchange; and
(iv) incorporating at least one supported Group 5-11 transition metal (M), with a molar ratio Ce : M in the range from 1 : 0.001 to 1 : 0.5, respectively, to provide a metal-supported catalyst system.

The process according to the present invention is particularly suitable for preparing the metal-supported catalytic system according to the first aspect of the invention.

In step (i), any source of cerium may be employed as the at least one cerium source. Preferably, the at least one cerium source in step (i) may be cerium oxide and/or at least one cerium salt. In one embodiment, the at least one cerium source in step (i) comprises cerium oxide and/or at least one cerium salt. The at least one cerium salt is preferably selected from the group consisting of cerium nitrate, ammonium cerium nitrate, cerium carbonate, cerium hydroxide, cerium sulfate, cerium oxalate and any combination thereof. However, other cerium salts known in the art could also be suitably employed.

In step (i), any source of alkali metal cations may be employed as the at least one alkali metal cation (Alk) source. Preferably, the at least one alkali metal cation (Alk) source in step (i) is selected from an alkali metal hydroxide, an alkali metal halide salt, an alkali metal nitrate salt, and any combination thereof. More preferably, the at least one alkali metal cation (Alk) source in step (i) is selected from an alkali metal hydroxide, an alkali metal halide salt, and any combination thereof, and still more preferably, the at least one alkali metal cation (Alk) source in step (i) is an alkali metal hydroxide.

In an embodiment, the at least one alkali metal cation (Alk) source in step (i) comprises an alkali metal hydroxide, an alkali metal halide salt, an alkali metal nitrate salt, or any combination thereof; more preferably, the at least one alkali metal cation (Alk) source in step (i) comprises an alkali metal hydroxide, an alkali metal halide salt, or any combination thereof; still more preferably, the at least one alkali metal cation (Alk) source in step (i) comprises an alkali metal hydroxide.

The alkali metal cation (Alk) is preferably selected from the group consisting of Li, Na, K, Rb, Cs, Fr, and any combination thereof. More preferably, the alkali metal cation (Alk) is preferably selected from the group consisting of Li, Na, K, and any combination thereof. Still more preferably, the alkali metal cation (Alk) is preferably selected from the group consisting of Li, Na, and any combination thereof. Still even more preferably, the alkali metal cation (Alk) is Na.

In an embodiment, the alkali metal cation (Alk) comprises Li, Na, K, Rb, Cs, Fr, or any combination thereof. More preferably, the alkali metal cation (Alk) comprises Li, Na, K, or any combination thereof. Still more preferably, the alkali metal cation (Alk) comprises Li, Na, or any combination thereof. Still even more preferably, the alkali metal cation (Alk) comprises Na.

In step (i), at least one source of a metal element (X) capable for forming a ceria-based mixed oxide may be employed in the mixture which is prepared. The at least one metal element (X) is preferably selected from the group consisting of Zr, In, Sn, La, Pr, Nd, Gd, Y, and any combination thereof. More preferably, the at least one metal element (X) is preferably selected from the group consisting of Zr, La, Y and any combination thereof. In another preferred embodiment, the at least one element (X) is selected from the group consisting of Zr, La and any combination thereof and, still more preferably, the at least one element (X) is Zr.

Any source of the metal element (X) may be employed in step (i) but said at least one source of a metal element (X) is preferably selected from the group consisting of a metal hydroxide, a metal salt and any combination thereof. Preferred metal salts include metal halide salts, metal nitrate salts or any combination thereof.

The mixture resulting from step (i) has a molar ratio:

*a* Ce : *b* X : *c* Alk : *d* H₂O

as defined by molar values *a, b,* c and *d,* wherein:
- *a* is 1;
- *b is* in the range from 0 to 0.4;
- *c* is higher than 0.01; and
- *d* is higher than 1.

The *b* value may preferably be in the range from 0 mol to 0.3 mol and, more preferably, the *b* value is in the range from 0.01 mol to 0.2 mol.

The c value may preferably be equal to or higher than 0.2, more preferably higher than 0.2, still more preferably equal to or higher than 1, and still even more preferably, the *c* value may be higher than 1, in particular, higher than 10 or higher than 20. In an embodiment, the *c* value may be in the range from 0.2 to 1,000, preferably in the range from 1 to 300. The c value may be in the range from 5 to 300, in the range from 5 to 200, or in the range from 25 to 300.

The *d* value may preferably be equal to or higher than 5, more preferably higher than 5, still more preferably equal to or higher than 10, and still even more preferably, the *d* value may be higher than 10. In an embodiment, the *d* value may be in the range from 5 to 10,000, preferably in the range from 10 to 10,000, more preferably in the range from 10 to 5,000 and still more preferably, in the range from 10 to 2,000. In an embodiment, the *d* value may be in the range from 50 to 2,000, in the range from 100 to 1,000, or in the range from 300 to 1,200. In another embodiment, the *d* value may be in the range from 500 to 2,000 or in the range from 200 to 1,500.

Step (ii) may be carried out under either static or stirred conditions, in a suitable reactor vessel such as polypropylene jars, Teflon^{®}-lined autoclaves or stainless steel autoclaves.

The expression "hydrothermal treatment" refers to treatment conditions in a sealed system involving water as the reaction medium and with temperatures and pressures higher than ambient, and usually significantly higher than ambient.

Preferably, in step (ii), the mixture is subjected to hydrothermal treatment at a temperature in the range from about 50°C to about 250°C preferably at a temperature in the range from about 100°C to about 200°C, and more preferably at a temperature in the range from about 125°C to about 175°C, during a determined period which is sufficient to form a crystalline material. Such determined period may be from about 1 hour to about 20 days, preferably from 2 hours to 10 days, and more preferably from 2 hours to about 2 days.

In an embodiment, the hydrothermal treatment in step (iii) is carried out at a temperature in the range from about 50°C to about 250°C during a period from about 1 hour to about 20 days, preferably from 2 hours to 10 days, and more preferably from 2 hours to about 2 days. In another embodiment, the hydrothermal treatment in step (iii) is carried out at a temperature in the range from about 100°C to about 200°C during a period from about 1 hour to about 20 days, preferably from 2 hours to 10 days, and more preferably from 2 hours to about 2 days. In still another embodiment, the hydrothermal treatment in step (iii) is carried out at a temperature in the range from about 125°C to about 175°C during a period from about 1 hour to about 20 days, preferably from 2 hours to 10 days, and more preferably from 2 hours to about 2 days.

In step (iii), the remaining alkali metal cations (Alk) are removed from the material previously obtained, until the quantity of residual alkali metal cations in the material is lower than 0.3 wt.%.

In step (iii), the remaining alkali metal cations (Alk) are removed from the material previously obtained by subjecting it to ion exchange, more particularly, to cationic exchange, for selectively and substantially removing the alkali metal cations. Such cationic exchange may be performed, for example, with an aqueous solution of an ammonium salt, such as ammonium chloride. The quantity of residual alkali metal cations may be determined by any known technique that allows to identify the chemical composition of the materials, such as inductively coupled plasma (ICP) spectroscopy or field emission scanning electron microscopy with energy dispersive X-ray spectroscopy (FESEM-EDX).

In a preferred embodiment, after step (ii) and before step (iii), the process may optionally further comprise another step, wherein the crystalline material resulting from step (ii) is separated from the mother liquor and recovered. The crystalline material may be separated by any means known in the art, such as decantation, filtration, ultrafiltration, centrifugation, or any other solid-liquid separation technique. In a still preferred embodiment, after step (ii) and before step (iii), the process may optionally further comprise another step, wherein the crystalline material resulting from step (ii) is first washed, and then separated from the mother liquor and recovered.

In step (iv), the at least one supported Group 5-11 transition metal (M), may be incorporated to provide the metal-supported catalyst system. The expression "incorporated" is to be understood as encompassing any possible way of adding the at least one supported Group 5-11 transition metal (M) to the support material formed in steps (i)-(iv) of the process. Preferably, the at least one supported Group 5-11 transition metal (M), may be incorporated to the support material resulting from steps (i)-(iv) by means of impregnation, adsorption, ion exchange, precipitation, or vapor or spray deposition, among others. In a particular embodiment, incorporating the at least one supported Group 5-11 transition metal (M) in step (iv) means depositing the at least one supported Group 5-11 transition metal (M), more particularly, depositing the at least one supported Group 5-11 transition metal (M) onto the product resulting from step (iii) (*i.e.* crystalline material which is substantially free of alkali metal cations) of the process according to the second aspect of the invention.

The at least one supported transition metal (M) employed in step (iv) may be particularly selected from the group consisting of Pd, Pt, Rh, Cu, Ru, Co, Ag, Nb and any mixture thereof; preferably, the at least one supported transition metal (M) may be selected from the group consisting of Pd, Pt, Rh, Cu, and any mixture thereof; more preferably, the at least one supported transition metal (M) may be selected from the group consisting of Pd, Pt and any mixture thereof; even more preferably, the at least one supported transition metal (M) is or consists of Pd.

The at least one supported Group 5-11 transition metal may be incorporated into step (iv) of the process according to the invention in the form of a Group 5-11 transition metal precursor. Said precursor is preferably a water-soluble Group 5-11 transition metal precursor, which may be incorporated into step (iv) directly or in the form of an aqueous solution, which may have been prepared prior to the incorporation. By way of illustration, suitable gold metal precursors include, but are not limited to, sodium tetrachloroaurate, potassium tetrabromoaurate, hydrogen tetronitratoaurate, sodium aurothiomalate, and any combination thereof. Suitable platinum metal precursors include, but are not limited to, hexachloroplatinic acid, sodium tetrachloroplatinate, platinum sulfate, and any combination thereof. %Suitable palladium metal precursors include, but are not limited to, palladium chloride, sodium tetrachloropalladate, tetraamminepalladium nitrate, palladium sulfate, and any combination thereof. Suitable silver metal precursors include, but are not limited to, silver nitrate, silver perchlorate, silver sulfate, silver potassium cyanide, and any combination thereof. Examples of copper precursors that may be used include, but are not limited to, Cu(acac)₂ (where acac=acetylacetonate), Cu(thd)₂ (where thd=tetrahydrodionate), hexafluoroacetylacetonate-copper-vinyltrimethylsilane, cyclopentadienyl (Cp) compounds (*e.g.* CpCu(CNMe), CpCu(CNCMe₃), Cp*CuCO, CpCuPR₃ (where R=Me, Et, or Ph), and CpCu(CSiMe₃)₂), CuCN, (CuCl)₂, (MeCN)₄CuX (where X=a halide, an alkyl, an amine, or a phenyl group), Me₃SiOCu(PMe₃)₃ or Cu(C₄H₄S).

After step (iv), the resulting metal-supported catalyst system typically has a molar ratio cerium:supported transition metal (Ce:M) in the range from 1:0.001 to 1:0.5; more preferably, the molar ratio Ce:M is in the range from 1:0.01 to 1:0.4 and, still more preferably, the molar ratio Ce:M is in the range from 1:0.05 to 1:0.3. The molar ratio Ce : M corresponds to the ratio between cerium from the at least one cerium source and the at least one supported Group 5-11 transition metal (M), in terms of moles. If a plurality of different supported Group 5-11 transition metals is used, the molar ratio of supported Group 5-11 transition metal to be considered for establishing this molar ratio Ce:M shall encompass the total number of moles corresponding to all those different supported Group 5-11 transition metals employed. Also, if a plurality of cerium sources is used, the molar ratio of cerium to be considered for establishing this molar ratio Ce:M shall encompass the total number of cerium moles, considering all the cerium sources employed.

The process according to the second aspect of the invention may further comprise a step (v), wherein the metal-supported catalyst resulting from step (iv) is:
- applied in or onto an inert substrate (*e.g.* a monolithic substrate or structure), wherein the substrate comprises silica, alumina, silica-alumina, silica-magnesia, silica-zirconia, silica-thoria, silica-beryllia, silica-titania, or any combination thereof; or
- shaped into pellets.

The process according to the second aspect of the invention may optionally further comprise an activation treatment, which may take place after step (iii) and/or step (iv) and/or the above-mentioned optional step taking place after step (ii) but before step (iii) for recovering the crystalline material resulting from step (ii). This activation treatment may advantageously allow further controlling the size and oxidized nature of the metal-supported catalyst system, particularly when using noble metals, such as Pd.

Said optional activation treatment comprises a heating step at a temperature of at least about 200°C (*i.e.* equal to or higher than about 200°C), preferably at least about 300°C (*i.e.* equal to or higher than about 300°C), more preferably at least about 370°C (*i.e.* equal to or higher than about 370°C) during a controlled period of at least 1 minute, but generally no longer than 20 hours. This optional activation treatment, and in particular this heating step, may be carried out under an oxidant atmosphere, preferably in presence of oxygen; under a reductant atmosphere, preferably in presence of hydrogen; and/or under an inert atmosphere, preferably in presence of N₂ or Ar.

In a preferred embodiment, after step (ii) and before step (iii), the process may optionally further comprise another step, wherein the crystalline material (*i.e.* raw synthesized crystals) resulting from step (ii) is separated from the mother liquor and recovered. The crystalline material may be separated by any means known in the art, such as decantation, filtration, ultrafiltration, centrifugation, or any other solid-liquid separation technique. In a still preferred embodiment, after step (ii) and before step (iii), the process may optionally further comprise another step, wherein the crystalline material (*i.e.* raw synthesized crystals) resulting from step (ii) is first washed, and then separated from the mother liquor and recovered.

In a particular embodiment, wherein the process may further comprise, after step (ii) and before step (iii), both the abovementioned optional activation treatment and the abovementioned optional step wherein the crystalline material (*i.e.* raw synthesized crystals) resulting from step (ii) is separated from the mother liquor and recovered, it will become apparent that the former will take place earlier than the latter, so that it is possible to advantageously perform an additional control of the size and oxidized nature of the metal-supported catalyst system before its separation from the mother liquor and subsequent recovery occur.

In a third aspect of the invention, it is provided a metal-supported catalytic system for methane combustion under wet conditions, which is obtained or obtainable according to the process of the second aspect of the invention, and optionally further defined according to any of the embodiments provided above.

In a particular embodiment of this third aspect of the invention, it is provided a metal-supported catalytic system according to first aspect of the invention, for methane combustion under wet conditions, which is obtained or obtainable according to the process of the second aspect of the invention, and wherein optionally the metal-supported catalytic system and/or the process from which it is obtained or obtainable may be further defined according to any of the above embodiments.

According to a fourth aspect of the invention, it is provided the use of the metal-supported catalytic system according to the first aspect of the invention in the catalytic combustion of methane under wet conditions.

According to a fifth aspect of the invention, it is provided the use of the metal-supported catalytic system which is obtained or obtainable according to the process of the second aspect of the invention, in the catalytic combustion of methane under wet conditions.

Throughout the description and the claims, the word "comprise" and variations thereof are not intended to exclude other technical features, ingredients or steps. Additional advantages and features of the invention will become apparent to those skilled in the art upon examination of the description or may be learned by practice of the invention without undue burden.

### EXAMPLES

The following examples are provided by way of illustration and shall not be construed as limiting the invention. Numerous variations are possible, and it is to be understood that within the scope of the appended claims, the invention may be practiced otherwise than as specifically described in the following examples.

In the Examples provided below, Field Scanning Electron Microscopy (FESEM) analyses have been performed using a ZEISS-Model GeminiSEM 500 microscope equipped with an Inlens EsB detector, working at 2-5 kV. High-Resolution Transmission Electron Microscopy (HR-TEM) analyses have been carried out using a 200 kV JEOL-Model JEM2100F microscope. Brunauer-Emmett-Teller (BET) values of the corresponding samples have been calculated from N₂ isotherms at 77 K on a volumetric Micromeritics ASAP^{™} 2020 analyzer, after activation at 400°C and under vacuum.

### EXAMPLE 1

### Synthesis of exemplary CeO₂-based support material in the form of nanocubes (cube-type morphology) according to the invention, substantially free of alkali metal cations, prepared according to steps (i)-(iii) of the process of the invention (i.e., including an alkali removal step)

4 gr of cerium nitrate (as Ce(NO₃)₃.6H₂O, purchased from Alfa-Aesar) was dissolved in 40 mL of water. Then, the aqueous solution of cerium was added dropwise over 155 g of a 14.3 wt.% aqueous solution of NaOH, and the mixture was maintained under stirring for 30 min.

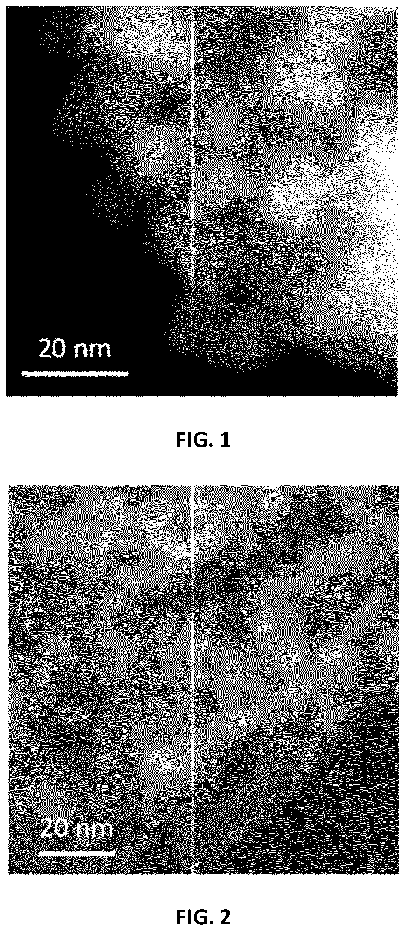

The mixture was introduced in a Teflon-lined stainless steel vessel autoclave and maintained at 175°C for 24 h. After the hydrothermal crystallization, the solid was washed and separated by filtration with water several times, followed by drying at 100°C overnight. HRTEM images of the resultant solids revealed the formation of ceria crystals with a cube-type morphology with average particle sizes of 10-20 nm (see FIG. 1). FESEM-EDX analyses of the resultant solid revealed the presence of ~1.3 wt.% of Na.

1 g of the resulting Na-containing ceria sample with a cube-type morphology was exchanged with 10 g of a 1 M aqueous solution of ammonium chloride. The mixture was maintained under stirring at 80°C for 10 h. Afterwards, the solid was washed and separated by filtration with water several times, followed by drying at 100°C overnight. Finally, the dried solid was calcined in air at 500°C for 3 h. FESEM-EDX analyses of the resultant solid revealed that the Na cations had been removed from the sample (~0.0 wt.% of Na). The measured BET surface area by N₂ adsorption was ~120 m²/g.

### EXAMPLE 2

### Synthesis of exemplary Pd-CeO₂ metal-supported catalytic system according to the invention, substantially free of alkali metal cations, based on the CeO₂-based support material with cube-type morphology of Example 1

1 g of the ceria support material according to the invention, which was prepared according to the Example 1, and which has a cube-type morphology and substantially free of alkali metal cations, was impregnated with ~3 wt.% of Pd. The Pd precursor used was tetraamminepalladium (II) nitrate solution (tetraamminepalladium (II) nitrate solution, 10 wt.% in water, purchased from Sigma-Aldrich) and the following procedure according to the invention was followed:
0.842 g of the 10 wt.% aqueous solution of Pd(NH₃)₄(NO₃)₂ was weighed and water was added to a total weight of 1.5 g solution. Then, this solution was added dropwise over 1 g of cerium oxide followed by drying at 100°C overnight. Finally, the sample was calcined at 650°C in air (100 ml/min).

### EXAMPLE 3

### Synthesis of exemplary Zr-Ce mixed oxide-based support material in the form of nanocubes (cube-type morphology) according to the invention, substantially free of alkali metal cations, prepared according to steps (i)-(iii) of the process of the invention (i.e. including an alkali removal step)

5 gr of cerium nitrate (as Ce(NO₃)_{3.}6H₂O purchased from Alfa-Aesar) and 0.4 gr of zirconium(IV) oxynitrate (as ZrO(NO₃)₂ hydrate, purchased from Sigma-Aldrich) were dissolved in 83 mL of water. Then, this aqueous solution was added dropwise over 100 g of a 14.3 wt.% aqueous solution of NaOH, and the mixture was maintained under stirring for 30 min.

The mixture was then introduced in a Teflon-lined stainless steel vessel autoclave and maintained at 175°C for 24 h. After the hydrothermal crystallization, the solid was washed and separated by filtration with water several times, followed by drying at 100°C overnight. The resultant solid presented Zr-containing ceria crystals with a cube-type morphology with average particle sizes of 20-40 nm as measured with HRTEM.

1 g of the resultant solid with a cube-type morphology was exchanged with 10 g of a 1 M aqueous solution of ammonium chloride. The mixture was maintained under stirring at 80°C for 10 h. Afterwards, the solid was washed and separated by filtration with water several times, followed by drying at 100°C overnight. FESEM-EDX analyses of the resultant solid revealed that the Na content was below 0.3 wt.% of Na, more specifically, ~0.0 wt.% of Na. Finally, the dried solid was calcined in air at 500°C for 3 h.

### COMPARATIVE EXAMPLE 1

### Synthesis of comparative Na-containing CeO₂-based support material in the form of nanocubes (cube-type morphology), prepared without an alkali removal step

4 gr of cerium nitrate (as Ce(NO₃)₃.6H₂O, purchased from Alfa-Aesar) was dissolved in 40 mL of water. Then, the aqueous solution of cerium was added dropwise over 155 g of a 14.3 wt.% aqueous solution of NaOH, and the mixture was maintained under stirring for 30 min.

The mixture was introduced in a Teflon-lined stainless steel vessel autoclave and maintained at 175°C for 24 h. After the hydrothermal crystallization, the solid was washed and separated by filtration with water several times, followed by drying at 100°C overnight. HRTEM images of the resultant solids revealed the formation of ceria crystals with a cube-type morphology with average particle sizes of 10-20 nm. FESEM-EDX analyses of the resultant solid revealed the presence of ~1.3 wt.% of Na.

### COMPARATIVE EXAMPLE 2

### Synthesis of comparative Na-containing Pd-CeO₂ metal-supported catalytic system based on the CeO₂-based support material with cube-type morphology of Comparative Example 1

1g of the Na-containing ceria support material with a cube-type morphology prepared according to the Comparative Example 1 was impregnated with ~3 wt.% of Pd. The Pd precursor used was tetraamminepalladium (II) nitrate solution (tetraamminepalladium (II) nitrate solution, 10 wt.% in water, purchased from Sigma-Aldrich), and the following procedure was followed:
0.842 g of the 10 wt.% aqueous solution of Pd(NH₃)₄(NO₃)₂ was weighed and water was added to a total weight of 1.5 g solution. Then, this solution was added dropwise over 1 g of cerium oxide followed by drying at 100°C overnight. Finally, the sample was calcined at 650°C in air (100 ml/min).

### COMPARATIVE EXAMPLE 3

### Synthesis of comparative CeO₂-based support material in the form of nanorods (rod-type morphology), substantially free of alkali metal cations

4.9 gr of cerium nitrate (as Ce(NO₃)₃.6H₂O, purchased from Alfa-Aesar and used without further purification) was dissolved in 84 mL of water. Then, the aqueous solution of cerium was added dropwise over 149 g of a 6.4 wt.% aqueous solution of NaOH, and the mixture was maintained under stirring for 30 min.

The mixture was introduced in a Teflon-lined stainless steel vessel autoclave and maintained at 100°C for 24 h. After the hydrothermal crystallization, the solid was washed and separated by filtration with water several times, followed by drying at 100°C overnight. HRTEM images of the resultant solids revealed the formation of ceria crystals with a rod-type morphology with average particle sizes of 40 nm x 5 nm (see FIG. 2).

1 g of the above Na-containing ceria sample with a rod-type morphology was exchanged with 10 g of a 1 M aqueous solution of ammonium chloride. The mixture was maintained under stirring at 80°C for 10 h. Afterwards, the solid was washed and separated by filtration with water several times, followed by drying at 100°C overnight. Finally, the dried solid was calcined in air at 500°C for 3 h. FESEM-EDX analyses of the resultant solid revealed that the Na content was was below 0.3 wt.% of Na, more specifically, ~0.0 wt.% of Na. The measured BET surface area by N₂ adsorption was ~100 m²/g.

### COMPARATIVE EXAMPLE 4

### Synthesis of comparative Pd-CeO₂ metal-supported catalytic system based on the CeO₂-based support material, substantially free of alkali metal cations, with rod-type morphology of Comparative Example 3

1 g of the Na-containing ceria sample with a rod-type morphology prepared according to the Comparative Example 3 of the present invention was impregnated with ~3 wt.% of Pd. The Pd precursor used was tetraamminepalladium (II) nitrate solution (tetraamminepalladium (II) nitrate solution, 10 wt.% in water, purchased from Sigma-Aldrich), and the following procedure was followed:
0.842 g of the 10 wt.% aqueous solution of Pd(NH₃)₄(NO₃)₂ was weighed and water was added to a total weight of 1.5 g solution. Then, this solution was added dropwise over 1 g of cerium oxide followed by drying at 100°C overnight. Finally, the sample was calcined at 650°C in air (100 ml/min).

### EXAMPLE 4

### Methane combustion reactions

Catalytic performance of samples obtained from each one the following three examples (described above in detail, in each corresponding section) in the methane combustion reaction has been assessed:

| | |
|---|---|
| - Example 2: | Pd-CeO₂ metal-supported catalytic system according to the invention, which is substantially free of alkaline metal cations and has a ceria-based support material with cube-type morphology, and has been prepared starting from the CeO₂-based support material in the form of nanocubes (cube-type morphology) of Example 1 according to the invention. |
| - Comparative Ex. 2: | Na-containing Pd-CeO₂ metal-supported catalytic system having the ceria-based support material with cube-type morphology. |
| - Comparative Ex. 4: | Pd-CeO₂ metal-supported catalytic system which is substantially free of alkaline metal cations and has the ceria-based support material with rod-type morphology. |

Each sample was pelletized by using a manual hydraulic press at 2-3 bars, and the resulting pellets were sieved using sieves from Filtra Vibración S.L. in order to obtain pellets with an average particle size of 0.25-0.42 mm. Subsequently, 50 mg of each pelletized sample were diluted in 1.5 g of pelletized silicon carbide before being used in each methane combustion reaction.

All methane combustion reactions were independently conducted in a fixed bed, quartz tubular reactor of 2.2 cm of diameter and 53 cm of length. For comparison purposes, samples prepared according to teach one of the three above-indicated Examples were tested for assessing catalysis performance in the methane combustion reaction under different experimental conditions, namely, (i) at four different reaction temperatures (i.e. 450°C, 500°C, 550°C and 600°C), and (ii) under both dry and wet conditions.

The expression "dry conditions" in the context of the methane combustion reactions herein performed is understood as meaning that the methane combustion is conducted using a reaction feed having a volume percentage of water which is below 0.5%, based on the total volume of the reaction feed.

For the particular experimental tests which were performed and herein summarized, the specific feed conditions employed in each case were the following:
- Methane combustion reactions under dry conditions: 0.1 vol.% CH₄ and 14.0 vol.% O₂ in N₂; total flow 150 mL/min; and GHSV=180,000 mL/g_{cat}·h.
- Methane combustion reactions under wet conditions: 0.1 vol.% CH₄, 14.0 vol.% O₂ and 6.1 vol.% H₂O in N₂; total flow 150 mL/min; and GHSV=180,000 mL/g_{cat}·h.
*GHSV = gas hourly space velocity

The catalytic results obtained with the different catalysts are summarized in Table 1 below:

**TABLE 1**

| | | | **CH₄ conversion (%)** | | | |
|---|---|---|---|---|---|---|
| **Entry** | **Metal-supported catalytic system** | **Water conditions** | **450°C** | **500°C** | **550°C** | **600°C** |
| 1 | Example 2 | Dry conditions | 72.0 | 88.7 | 95.2 | 98.4 |
| 2 | Example 2 | Wet conditions | 35.4 | 72.1 | 86.9 | 90.7 |
| 3 | Comparative Example 2 | Dry conditions | 3.5 | 7.5 | 13.1 | 21.3 |
| 4 | Comparative Example 2 | Wet conditions | 0.9 | 2.0 | 3.7 | 9.9 |
| 5 | Comparative Example 4 | Dry conditions | 23.1 | 75.0 | 89.4 | 95.8 |
| 6 | Comparative Example 4 | Wet conditions | 8.3 | 24.6 | 48.4 | 69.2 |

As clearly seen in Table 1, the two reactions conducted with the samples corresponding to the Na-containing Pd-CeO₂ catalytic system prepared according to Comparative Example 2, having a ceria-based support material with cube-type morphology, resulted in very low methane conversion (see entries 3-4), even when tested at very high temperatures (i.e. 9.9% at 600°C, see Table 1). However, it was surprisingly found that, when the same Na-containing Pd-CeO₂ sample was previously subjected to a cation exchange treatment to substantially remove all alkali metal cations (more particularly, the Na species) according to the process of the invention, the resulting Pd-CeO₂ catalytic system advantageously led to a substantial increase in methane conversion for all tested temperatures (see entries 1-2) compared to the results obtained with the abovementioned Na-containing Pd-CeO₂ catalytic system of Comparative Example 2. These unexpected experimental results clearly evidence the inhibiting effect of the alkali metal cations in the Pd-CeO₂ catalyst presenting a cube-type morphology.

On the other hand, entries 5-6 of Table 1 further illustrate the results obtained when the methane combustion reaction was conducted with samples corresponding to the Pd-CeO₂ catalytic system prepared according to Comparative Example 4, having a ceria-based support material with rod-type morphology and being substantially free of alkali metal cations, more particularly, the Na species. Results evidence that methane conversion values obtained with this rod-type Pd-CeO₂ catalyst were significantly lower (see entries 5-6) than those obtained with cube-type Pd-CeO₂ catalysts according to the present invention (see entries 1-2). More particularly, when both catalysts were evaluated under wet conditions, the Pd-CeO₂ catalyst presenting a cube-type morphology according to the invention (see entry 2) was considerably more active than the comparative analogous Pd-CeO₂ catalyst with a rod-type morphology (see entry 6).

Additionally, the methane conversion rate loss observed using the Pd-CeO₂ catalyst with a cube-type morphology of Example 2 (see entries 1-2) according to the present invention, when comparing dry and wet conditions, was substantially lower than that of the comparative Pd-CeO₂ catalyst with a rod-type morphology (see entries 5-6) at the different tested reaction temperatures. In particular, the methane conversion rate loss for the Pd-CeO₂ catalyst with cube-type morphology according to the invention is ~50.8% and ~8.7% at 450°C and 550°C, respectively (see entries 1-2), when changing from dry conditions to wet conditions. However, in the results obtained with the comparative Pd-CeO₂ catalyst with rod-type morphology of Comparative Example 5 (see entries 5-6), the methane conversion rate loss was remarkably higher (i.e. ~64.0 and ~45.9% at 450 and 550°C, respectively; see entries 5-6).

## Claims

1. A metal-supported catalytic system for methane combustion under wet conditions, wherein the methane combustion is carried out using a reaction feed having a volume percentage of water which is in the range from 0.5% to 30%, based on the total volume of the reaction feed, wherein the metal-supported catalytic system is **characterized by** comprising:
- a support material comprising at least one oxide selected from the group consisting of ceria, a ceria-based mixed oxide, and any combination thereof, and
- at least one supported transition metal (M) selected from any of the groups 5 to 11 of the periodic table of the elements;
wherein the support material is in the form of nanocubes and is substantially free of alkali metal cations (Alk); and
wherein the amount of the at least one supported transition metal (M) is less than 10 % by weight based on the total weight of the catalytic system.

2. The metal-supported catalytic system according to claim 1, wherein the support material has a primary particle size in the range from about 2 nm to about 800 nm.

3. The metal-supported catalytic system according to claim 1 or 2, wherein the support material comprises at least one ceria-based mixed oxide, wherein the at least one ceria-based mixed oxide comprises less than 40 mol % of at least one metal element (X) capable of forming a ceria-based mixed oxide, and wherein the at least one metal element (X) is selected from the group consisting of Zr, In, Sn, La, Pr, Nd, Gd, Y and any combination thereof.

4. The metal-supported catalytic system according to any one of claims 1-3, wherein the support material comprises ceria.

5. The metal-supported catalytic system according to any of claims 1-4, wherein the at least one supported transition metal (M) is selected from the group consisting of Pd, Pt, Rh, Cu, Ru, Co, Ag, Nb and any mixture thereof.

6. The metal-supported catalytic system according to any one of claims 1-5, further comprising an inert substrate which comprises silica, alumina, silica-alumina, silica-magnesia, silica-zirconia, silica-thoria, silica-beryllia, silica-titania, or any combination thereof.

7. A process for preparing the metal-supported catalytic system as defined in any one of claims 1-6, **characterized by** comprising the steps of:
(i) preparing a mixture comprising water, at least one cerium source, at least one alkali metal cation (Alk) source, and optionally at least one source of a metal element (X) capable of forming a ceria-based mixed oxide;
wherein the resulting mixture has a composition with a molar ratio:
*a* Ce : *b* X : *c* Alk : *d* H₂O
wherein
a is 1;
*b is* in the range from 0 to 0.4;
c is higher than 0.01; and
d is higher than 1.
(ii) subjecting the mixture to hydrothermal treatment at a temperature in the range from 50°C to 250°C during a determined period which is sufficient to form a crystalline material;
(iii) removing the remaining alkali metal cations (Alk) from the material resulting from step (ii) until the quantity of residual alkali metal cations in the material is lower than 0.3 wt.%, by subjecting it to ion exchange; and
(iv) incorporating at least one supported Group 5-11 transition metal (M), with a molar ratio Ce : M in the range from 1 : 0.001 to 1 : 0.5, respectively, to provide a metal-supported catalyst system.

8. The process according to claim 7, wherein the cerium source is cerium oxide and/or at least one cerium salt.

9. The process according to claim 8, wherein the cerium salt is selected from the group consisting of cerium nitrate, ammonium cerium nitrate, cerium carbonate, cerium hydroxide, cerium sulfate, cerium oxalate, and any combination thereof.

10. The process according to any one of claims 7-9, wherein the alkali metal cation (Alk) is selected from the group consisting of Li, Na, K, Rb, Cs, Fr, and any combination thereof.

11. The process according to any one of claims 7-10, wherein the at least one alkali metal cation (Alk) source is selected from an alkali metal hydroxide, an alkali metal halide salt, an alkali metal nitrate salt, and any combination thereof.

12. The process according to any one of claims 7-11, wherein the at least one metal element (X) is selected from the group consisting of Zr, In, Sn, La, Pr, Nd, Gd, Y, and any combination thereof.

13. The process according to any one of claims 7-12, wherein the at least one metal element (X) source is selected from a metal hydroxide, a metal salt, and any combination thereof.

14. The process according to any one of claims 7-13, further comprising a step (v), wherein the metal-supported catalyst resulting from step (iv) is:
- applied in or onto an inert substrate, wherein the substrate comprises silica, alumina, silica-alumina, silica-magnesia, silica-zirconia, silica-thoria, silica-beryllia, silica-titania, or any combination thereof; or
- shaped into pellets.

15. Use of a metal-supported catalytic system as defined in any one of claims 1-6 or as obtained according to the process defined in any one of claims 7-14, in the catalytic combustion of methane under wet conditions.

## Patentansprüche

1. Metallgestütztes katalytisches System für die Methanverbrennung unter nassen Bedingungen, wobei die Methanverbrennung unter Verwendung einer Reaktionsbeschickung mit einem Volumenprozentsatz an Wasser im Bereich von 0,5 % bis 30 %, bezogen auf das Gesamtvolumen der Reaktionsbeschickung, durchgeführt wird, wobei das metallgestützte katalytische System **dadurch gekennzeichnet ist, dass** es Folgendes umfasst:
- ein Trägermaterial, umfassend mindestens ein Oxid, das ausgewählt ist aus der Gruppe bestehend aus Ceroxid, einem Ceroxidbasiertem Mischoxid und einer beliebigen Kombination davon, und
- mindestens ein geträgertes Übergangsmetall (M), das ausgewählt ist aus einer der Gruppen 5 bis 11 des Periodensystems der Elemente;
wobei das Trägermaterial in Form von Nanowürfeln vorliegt und im Wesentlichen frei von Alkalimetallkationen (Alk) ist; und
wobei die Menge des mindestens einen geträgerten Übergangsmetalls (M) weniger als 10 Gew.-%, bezogen auf das Gesamtgewicht des katalytischen Systems, beträgt.

2. Metallgestütztes katalytisches System nach Anspruch 1, wobei das Trägermaterial eine Primärteilchengröße im Bereich von etwa 2 nm bis etwa 800 nm aufweist.

3. Metallgestütztes katalytisches System nach Anspruch 1 oder 2, wobei das Trägermaterial mindestens ein Ceroxid-basiertes Mischoxid umfasst, wobei das mindestens eine Ceroxid-basierte Mischoxid weniger als 40 Mol-% von mindestens einem Metallelement (X) umfasst, das in der Lage ist, ein Ceroxid-basiertes Mischoxid zu bilden, und wobei das mindestens eine Metallelement (X) ausgewählt ist aus der Gruppe bestehend aus Zr, In, Sn, La, Pr, Nd, Gd, Y und einer beliebigen Kombination davon.

4. Metallgestütztes katalytisches System nach einem der Ansprüche 1 bis 3, wobei das Trägermaterial Ceroxid umfasst.

5. Metallgestütztes katalytisches System nach einem der Ansprüche 1 bis 4, wobei das mindestens eine geträgerte Übergangsmetall (M) ausgewählt ist aus der Gruppe bestehend aus Pd, Pt, Rh, Cu, Ru, Co, Ag, Nb und einer beliebigen Mischung davon.

6. Metallgestütztes katalytisches System nach einem der Ansprüche 1 bis 5, das ferner ein inertes Substrat umfasst, das Siliciumdioxid, Aluminiumoxid, Siliciumdioxid-Aluminiumoxid, Siliciumdioxid-Magnesiumoxid, Siliciumdioxid-Zirkonoxid, Siliciumdioxid-Thoriumoxid, Siliciumdioxid-Berylliumoxid, Siliciumdioxid-Titanoxid oder eine beliebige Kombination davon umfasst.

7. Verfahren zur Herstellung des metallgestützten katalytischen Systems nach einem der Ansprüche 1 bis 6, **dadurch gekennzeichnet, daß** es die folgenden Schritte umfasst:
(i) Herstellen einer Mischung, die Wasser, mindestens eine Cer-Quelle, mindestens eine Alkalimetallkationen(Alk)-Quelle und optional mindestens eine Quelle eines Metallelements (X) umfasst, das in der Lage ist, ein Ceroxid-basiertes Mischoxid zu bilden;
wobei die resultierende Mischung eine Zusammensetzung mit einem Molverhältnis aufweist:
*a* Ce : *b* X : *c* Alk : *d* H₂O
wobei
*a* gleich 1 ist;
*b* im Bereich von 0 bis 0,4 liegt;
*c* größer als 0,01 ist; und
*d* größer als 1 ist.
(ii) Unterziehen der Mischung einer hydrothermalen Behandlung bei einer Temperatur im Bereich von 50 °C bis 250 °C während eines bestimmten Zeitraums, der ausreicht, um ein kristallines Material zu bilden;
(iii) Entfernen der verbleibenden Alkalimetallkationen (Alk) aus dem Material, das aus Schritt (ii) resultiert, bis die Menge der restlichen Alkalimetallkationen in dem Material weniger als 0,3 Gew.-% beträgt, indem es einem Ionenaustausch unterzogen wird; und
(iv) Einbringen mindestens eines geträgerten Übergangsmetalls (M) der Gruppe 5-11 mit einem Molverhältnis Ce : M im Bereich von 1 : 0,001 bis 1 : 0,5, um ein metallgestütztes katalytisches System bereitzustellen.

8. Verfahren nach Anspruch 7, wobei die Cer-Quelle Ceroxid und/oder mindestens ein Cersalz ist.

9. Verfahren nach Anspruch 8, wobei das Cersalz ausgewählt ist aus der Gruppe bestehend aus Cernitrat, Ammoniumcernitrat, Cercarbonat, Cerhydroxid, Cersulfat, Ceroxalat und einer beliebigen Kombination davon.

10. Verfahren nach einem der Ansprüche 7 bis 9, wobei das Alkalimetallkation (Alk) ausgewählt ist aus der Gruppe bestehend aus Li, Na, K, Rb, Cs, Fr und einer beliebigen Kombination davon.

11. Verfahren nach einem der Ansprüche 7 bis 10, wobei die mindestens eine Alkalimetallkationenquelle (Alk-Quelle) ausgewählt ist aus einem Alkalimetallhydroxid, einem Alkalimetallhalogenidsalz, einem Alkalimetallnitratsalz und einer beliebigen Kombination davon.

12. Verfahren nach einem der Ansprüche 7 bis 11, wobei das mindestens eine Metallelement (X) ausgewählt ist aus der Gruppe bestehend aus Zr, In, Sn, La, Pr, Nd, Gd, Y und einer beliebigen Kombination davon.

13. Verfahren nach einem der Ansprüche 7 bis 12, wobei die mindestens eine Metallelementquelle (X-Quelle) ausgewählt ist aus einem Metallhydroxid, einem Metallsalz und einer Kombination davon.

14. Verfahren nach einem der Ansprüche 7 bis 13, ferner umfassend einen Schritt (v), wobei mit dem aus Schritt (iv) resultierenden metallgestützten Katalysator Folgendes durchgeführt wird:
- Aufbringen auf ein inertes Substrat, wobei das Substrat Siliciumdioxid, Aluminiumoxid, Siliciumdioxid-Aluminiumoxid, Siliciumdioxid-Magnesiumoxid, Siliciumdioxid-Zirkonoxid, Siliciumdioxid-Thoriumoxid, Siliciumdioxid-Berylliumoxid, Siliciumdioxid-Titanoxid oder eine beliebige Kombination davon umfasst; oder
- Formen zu Pellets.

15. Verwendung eines metallgestützten katalytischen Systems, wie in einem der Ansprüche 1 bis 6 definiert, oder wie es gemäß dem in einem der Ansprüche 7 bis 14 definierten Verfahren erhalten wird, bei der katalytischen Verbrennung von Methan unter nassen Bedingungen.

## Revendications

1. Système catalytique à support métallique pour la combustion du méthane dans des conditions humides, dans lequel la combustion du méthane est effectuée en utilisant une charge de réaction ayant un pourcentage en volume d'eau qui est dans la plage de 0,5 % à 30 %, sur la base du volume total de la charge de réaction, dans lequel le système catalytique à support métallique est **caractérisé en ce qu'**il comprend :
- un matériau de support comprenant au moins un oxyde choisi dans le groupe constitué par l'oxyde de cérium, un oxyde mixte à base d'oxyde de cérium, et toute combinaison de ceux-ci, et
- au moins un métal de transition sur support (M) choisi parmi l'un quelconque des groupes 5 à 11 du tableau périodique des éléments ;
dans lequel le matériau de support est sous la forme de nanocubes et est sensiblement exempt de cations de métal alcalin (Alk) ; et
dans lequel la quantité de l'au moins un métal de transition sur support (M) est inférieure à 10 % en poids sur la base du poids total du système catalytique.

2. Système catalytique à support métallique selon la revendication 1, dans lequel le matériau de support a une taille de particule primaire dans la plage d'environ 2 nm à environ 800 nm.

3. Système catalytique à support métallique selon la revendication 1 ou 2, dans lequel le matériau de support comprend au moins un oxyde mixte à base d'oxyde de cérium, dans lequel l'au moins un oxyde mixte à base d'oxyde de cérium comprend moins de 40 % en moles d'au moins un élément métallique (X) capable de former un oxyde mixte à base d'oxyde de cérium, et dans lequel l'au moins un élément métallique (X) est choisi dans le groupe constitué par Zr, In, Sn, La, Pr, Nd, Gd, Y et toute combinaison de ceux-ci.

4. Système catalytique à support métallique selon l'une quelconque des revendications 1 à 3, dans lequel le matériau de support comprend de l'oxyde de cérium.

5. Système catalytique à support métallique selon l'une quelconque des revendications 1 à 4, dans lequel l'au moins un métal de transition sur support (M) est choisi dans le groupe constitué par Pd, Pt, Rh, Cu, Ru, Co, Ag, Nb et tout mélange de ceux-ci.

6. Système catalytique à support métallique selon l'une quelconque des revendications 1 à 5, comprenant en outre un substrat inerte qui comprend de la silice, de l'alumine, de la silice-alumine, de la silice-magnésie, de la silice-zircone, de la silice-thorine, de la silice-glucine, de la silice-dioxyde de titane ou toute combinaison de celles-ci.

7. Procédé de préparation du système catalytique à support métallique tel que défini dans l'une quelconque des revendications 1 à 6, **caractérisé en ce qu'**il comprend les étapes suivantes :
(i) la préparation d'un mélange comprenant de l'eau, au moins une source de cérium, au moins une source de cations de métal alcalin (Alk), et facultativement au moins une source d'un élément métallique (X) capable de former un oxyde mixte à base d'oxyde de cérium ;
dans lequel le mélange résultant a une composition avec un rapport molaire :
*a* Ce : *b* X : *c* Alk : *d* H₂O
où
*a* est 1 ;
*b* est dans la plage de 0 à 0,4 ;
*c* est supérieur à 0,01 ; et
*d* est supérieur à 1.
(ii) la soumission du mélange à un traitement hydrothermique à une température dans la plage de 50 °C à 250 °C pendant une période déterminée qui est suffisante pour former un matériau cristallin ;
(iii) l'élimination des cations de métal alcalin (Alk) restants du matériau résultant de l'étape (ii) jusqu'à ce que la quantité de cations de métal alcalin résiduels dans le matériau soit inférieure à 0,3 % en poids, par soumission à un échange d'ions ; et
(iv) l'incorporation d'au moins un métal de transition (M) des Groupes 5 à 11 sur support, avec un rapport molaire Ce: M dans la plage de 1:0,001 à 1:0,5 respectivement, pour fournir un système catalyseur à support métallique.

8. Procédé selon la revendication 7, dans lequel la source de cérium est l'oxyde de cérium et/ou au moins un sel de cérium.

9. Procédé selon la revendication 8, dans lequel le sel de cérium est choisi dans le groupe constitué par le nitrate de cérium, le nitrate d'ammonium et de cérium, le carbonate de cérium, l'hydroxyde de cérium, le sulfate de cérium, l'oxalate de cérium et toute combinaison de ceux-ci.

10. Procédé selon l'une quelconque des revendications 7 à 9, dans lequel le cation de métal alcalin (Alk) est choisi dans le groupe constitué par Li, Na, K, Rb, Cs, Fr et toute combinaison de ceux-ci.

11. Procédé selon l'une quelconque des revendications 7 à 10, dans lequel l'au moins une source de cations de métal alcalin (Alk) est choisie parmi un hydroxyde de métal alcalin, un sel d'halogénure de métal alcalin, un sel de nitrate de métal alcalin et toute combinaison de ceux-ci.

12. Procédé selon l'une quelconque des revendications 7 à 11, dans lequel l'au moins un élément métallique (X) est choisi dans le groupe constitué par Zr, In, Sn, La, Pr, Nd, Gd, Y et toute combinaison de ceux-ci.

13. Procédé selon l'une quelconque des revendications 7 à 12, dans lequel l'au moins une source d'élément métallique (X) est choisie parmi un hydroxyde métallique, un sel métallique et toute combinaison de ceux-ci.

14. Procédé selon l'une quelconque des revendications 7 à 13, comprenant en outre une étape (v), dans lequel le catalyseur à support métallique résultant de l'étape (iv) est :
- appliqué dans ou sur un substrat inerte, dans lequel le substrat comprend de la silice, de l'alumine, de la silice-alumine, de la silice-magnésie, de la silice-zircone, de la silice-thorine, de la silice-glucine, de la silice-dioxyde de titane, ou toute combinaison de celles-ci ; ou
- façonné en pastilles.

15. Utilisation d'un système catalytique à support métallique tel que défini dans l'une quelconque des revendications 1 à 6 ou tel qu'obtenu selon le procédé défini dans l'une quelconque des revendications 7 à 14, dans la combustion catalytique du méthane dans des conditions humides.
